# EUROPEAN PATENT APPLICATION

(11) **EP 2 518 631 A1**
(43) Date of publication of application: **31.10.2012**
(21) Application number: 10845544.5
(22) Date of filing: 11.08.2010
(51) Int. Cl.: G06F 12/00, G06T 1/60

(54) **PICTURE LOADING METHOD AND TERMINAL**

(30) Priority: 10.02.2010 CN 201010111053
(71) Applicant: ZTE Corporation, Shenzhen, Guangdong 518057 (CN)
(72) Inventor: ZHANG, Fei, Shenzhen Guangdong 518057 (CN)
(74) Representative: Jansen, Cornelis Marinus
(86) International application number: PCT/CN2010/075900
(87) International publication number: WO 2011/097874

(57) **Abstract**

The disclosure provides a picture loading method and a terminal. The method includes determining a number of pictures that can be loaded according to an available memory space, acquiring, from a plurality of pictures, the determined number of pictures beginning at a starting position, and assigning resources for the acquired pictures and preloading the acquired pictures using the resources. The disclosure also provides a picture loading terminal.

## Description

### TECHNICAL FIELD

The disclosure relates to the field of communications and particularly to a picture loading method and a terminal.

### BACKGROUND

Although advantaged in small size and portability, an image terminal device having a low-speed processor and a small-capacity memory is limited in data processing capacity when compared with a normal Personal Computer (PC), and thus its limited resources must be exploited to cover, to some extent, the inherent deficiency in data processing capacity.

Existing image terminal device (e.g. handset) having a low-speed processor and a low memory can implement zero-wait during an operation of a user through a multi-thread picture loading, but still has some defects. Specifically, the multi-thread picture loading is designed in the following two forms:
(1) loading all pictures. In this picture loading mode, no delay in picture loading occurs when the user is browsing pictures, which is beneficial for user experience. On the other hand, this loading mode consumes the memory of a terminal severely and is therefore infeasible for an image terminal device having a low-speed processor and a small-capacity memory. With the continuous development of memory technique, the capacity of a flash will be greater and greater, and the number of the pictures stored by a user may be significantly huge, which will definitely cause a terminal crashing.
(2) loading visible pictures only. This loading mode is a load-for-immediate-use loading mode which greatly saves the resources of a terminal. However, this loading mode accordingly causes a poor user experience, that is, the user needs to wait for the loading of a picture every time the user switches to a new page. If the picture file is large or the resolution of a picture is slow, the user has to wait for a very long time.

In view of the above, it is urgent to optimize the picture loading mode of existing picture terminal device having a low-speed processor and a small-capacity memory.

### SUMMARY

The main object of the disclosure is to provide a picture loading scheme to address the problem that existing picture terminal device having a low-speed processor and a small-capacity memory causes a severe memory consumption when loading all pictures and a slow picture resolution when loading visible pictures.

In order to achieve the purpose above, according to an aspect of the disclosure, a picture loading method is provided.

The picture loading method according to the disclosure includes determining a number of pictures that can be loaded according to an available memory space, acquiring, from a plurality of pictures, the determined number of pictures beginning at a starting position, assigning resources for the acquired pictures, and preloading the acquired pictures using the resources.

Preferably, the acquiring, from the plurality of pictures, the determined number of pictures beginning at a starting position includes re-acquiring the determined number of pictures beginning at the changed starting position, when the starting position is changed.

Preferably, the starting position is changed by at least one of dragging a scroll bar on a screen with a quick key or through a touch, and changing the current screen.

Preferably, the method further includes determining new pictures to be displayed on a screen in a thumbnail form, after the starting position is changed; and displaying the new pictures to be displayed directly from the preloaded pictures, when the new pictures to be displayed belong to the preloaded pictures.

Preferably, the method further includes: after preloading the acquired pictures using the resources, recycling the resources assigned to the pictures not belonging to the re-acquired pictures.

Preferably, the number is greater than a number of pictures displayed on a current screen.

Preferably, the starting position is determined through list items of pictures in a picture directory and/or a position of a scroll bar on a screen.

In order to achieve the purpose above, according to another aspect of the disclosure, a terminal is also provided.

The terminal according to the disclosure includes a determination module, configured to determine a number of pictures that can be loaded according to an available memory space; an acquisition module, configured to acquire, from a plurality of pictures, the determined number of pictures beginning at a starting position; and a loading module, configured to assign resources for the acquired pictures and to preload the acquired pictures using the resources.

Preferably, the acquisition module comprises an update unit configured to re-acquire the determined number of pictures beginning at the changed start position, when the starting position is changed,

Preferably, the update unit is further configured to change the starting position when a scroll bar on a screen is dragged with a quick key or through a touch or the current screen is changed.

According to the disclosure, pictures can be pre-resolved while the user is carrying out an operation, which solves the problem that severe memory consumption is caused if all pictures are loaded and slow picture resolution is caused if only visible pictures are loaded. It is assured that picture data resources are ready when a user accesses pictures, which implements zero waiting of the user performing a picture switching and continuity of picture preview. According, the user experience is improved and system resources are fully exploited.

### BRIEF DESCRIPTION OF DRAWINGS

The accompanying drawings illustrated herein are provided for better understanding of the disclosure and form one part of the disclosure, and the exemplary embodiments of the disclosure and the description thereof are illustrative of the disclosure but are not to be construed as limiting the disclosure. In the accompanying drawings:
Fig. 1 is a structural block diagram of a terminal according to the embodiment of the disclosure;
Fig. 2 is a structural block diagram of a preferred terminal according to the embodiment of the disclosure;
Fig. 3 is a flow chart of the picture loading method according to the embodiment of the disclosure;
Fig. 4 is a flow chart illustrating the flow of entering a picture directory according to the embodiment of the disclosure; and
Fig. 5 is a flow chart of picture page switching according to the embodiment of the disclosure.

### DETAILED DESCRIPTION

The disclosure is described below in detail with reference to the accompanying drawings in conjunction with embodiments. It should be noted that the embodiments described herein and the features thereof can be combined with each other on condition that no conflict is caused.

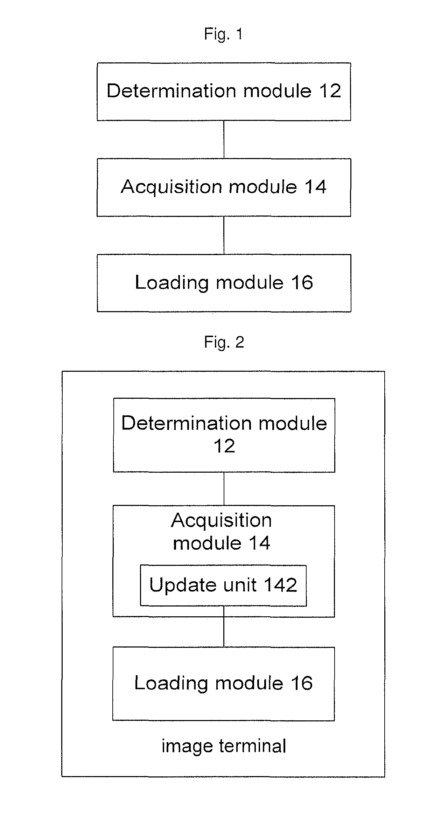

In accordance with an embodiment of the disclosure, a terminal is provided. Fig. 1 is a structural block diagram of a terminal according to the embodiment of the disclosure. As shown in Fig. 1, the terminal comprises a determination module 12, an acquisition module 14 and a loading module 16. The terminal will be described in detail below.

The determination module 12 is configured to determine the number of the pictures that can be loaded according to an available memory space; the acquisition module 14 is coupled to the determination module 12 to acquire, from a plurality of pictures, the determined number of pictures beginning at a starting position; and the loading module 16 is coupled to the acquisition module 14 to distribute resources for the acquired pictures and to preload the acquired pictures using the resources.

By using the terminal, pictures can be pre-resolved while the user is carrying out an operation, which solves the problem that severe memory consumption is caused if all pictures are loaded and slow picture resolution is caused if only visible pictures are loaded.

Fig. 2 is a structural block diagram of a preferred terminal according to the embodiment of the disclosure. As shown in Fig. 2, the acquisition module 14 includes an update unit 142 configured to re-acquire the determined number of pictures from the changed starting position, when the starting position is changed.

Preferably, the update unit 142 is further configured to change the starting position when the scroll bar of a screen is dragged with a quick key or through a touch or the current screen is changed. That is, either dragging the scroll bar of a screen with a quick key or through a touch or other actions (e.g. gravity induction using a sensor) causing the current screen to be changed can trigger a change in the starting position.

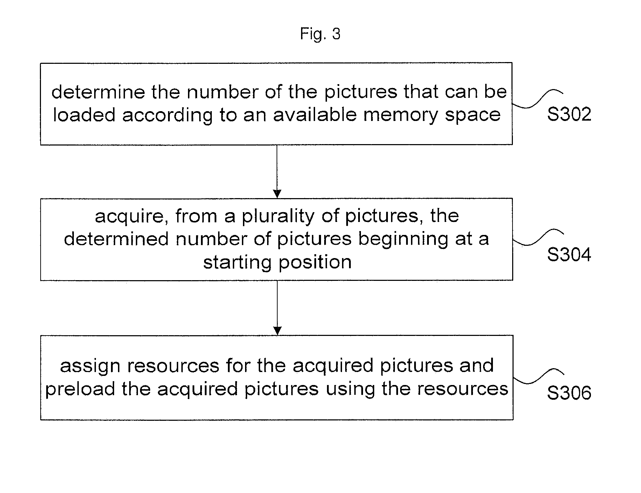

In an embodiment of the disclosure, a picture loading method is provided corresponding to the terminal. Fig. 3 is a flow chart of the picture loading method according to the embodiment of the disclosure. As shown in Fig. 3, the method comprises the following steps:
Step S302: the number of the pictures that can be loaded is determined according to an available memory space;
Step S304: the determined number of pictures beginning at a starting position is acquired from a plurality of pictures; and
Step S306: resources for the acquired pictures and the acquired pictures are preloaded using the resources.

According to this method above, it is assured that picture data resources are ready when a user accesses pictures, which implements zero waiting of the user performing a picture switching and continuity of picture preview.

Preferably, the number of the pictures that can be loaded determined in Step S302 is greater than that of the pictures displayed on the current screen. This method enables pictures newly presented on a screen to be viewed directly without being preloaded, thus improving the user experience.

Preferably, if the starting position is changed, then the determined number of pictures are re-acquired from the changed starting position in Step S304. For instance, either dragging the scroll bar of the screen with a quick key or through a touch or other actions (e.g. gravity induction using a sensor) causing the current screen changed can trigger a change in the starting position. Additionally, the starting position can be determined by the list items of the pictures in a picture directory and/or the position of the scroll bar of the screen and/or other screen page positioning mechanism. This approach determines a definite opportunity for the preloading of a certain number of pictures so that the number can be dynamically changed according to the usage of a memory, thus increasing the flexibility of a system.

Preferably, after the starting position is changed, the new pictures to be displayed on a screen in a thumbnail form are determined. If the new pictures to be displayed belong to the preloaded pictures, then the new pictures to be displayed are directly displayed from the preloaded pictures. In the case where the scroll bar of the screen is dragged by a rapid key or through a touch and pictures are displayed in a thumbnail form, this approach enables a user to see the displayed pictures directly, without spending any time in waiting, and consequently improves the user experience.

Preferably, after Step S306 is performed, the resources assigned for the pictures not belonging to the determined number of pictures may be recycled. This approach improves the utilization of a memory as well as the system performance.

The Steps 302-306 may be performed in a multi-thread preloading and memory management manner during the implementation process of the method, wherein the multi-thread preloading mainly involves two threads: thread 1, which is responsible for making a response to an operation of the user and plays the role of a controller during the whole operation process; and thread 2, which is responsible for the loading of pictures and plays the role of a performing unit during the whole process. The two complementary threads cooperate with each other through a synchronization mechanism to preprocess pictures and manage the memory of a terminal.

Specifically, the thread 1 parses the operation instructions of a user, assigns a task to each picture list item meeting upper and lower picture loading limits according to the attributes of the picture list item, and adds the task to the queue of the thread 2 through a synchronization mechanism so that the task can be processed by the thread 2; meanwhile, the thread 1 recycles the resources of the picture list items that fail to meet the upper and lower picture loading limits but are assigned with system resources. Then, the thread 1 continues to monitor the actions of the user and the task result returned from the thread 2 and processes the task result. The task of the thread 2 simple, which is to process the picture resolution requests in the queue of the thread 2 through a synchronization mechanism, perform picture resolutions, and then inform the thread 1 of the results of the resolutions. It should be noted that the upper and lower picture loading limits refer to the range from an upper limit to a lower limit in a picture directory list that are appointed in software and are to be processed by a picture resolution function, that is, the picture list items in the picture directory list for which picture resolutions are desired.

Specific embodiments of the technical scheme disclosed herein are described below in detail.

### Preferred embodiment 1

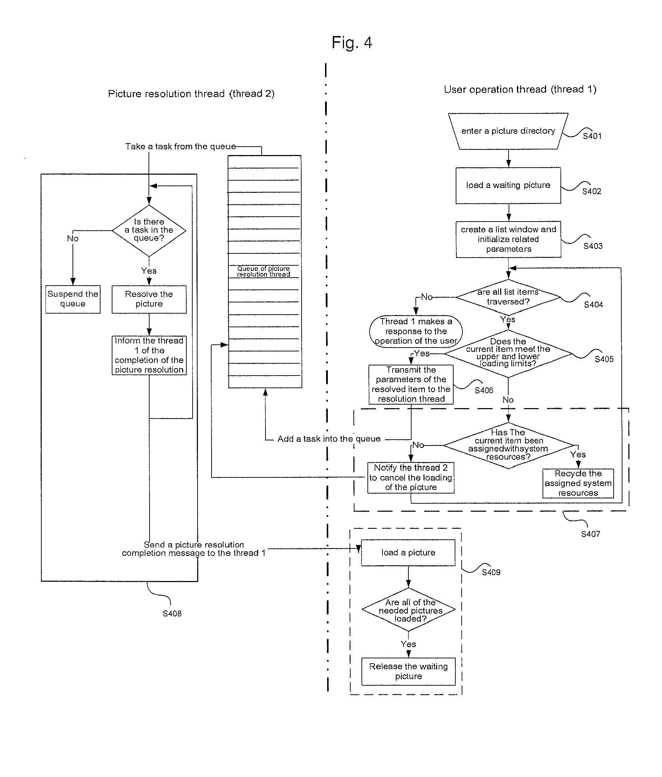

Fig. 4 is a flow chart illustrating the flow of entering a picture directory according to the embodiment of the disclosure. As shown in Fig. 4, when a user initially enters a picture file directory, the upper and lower loading limits are determined according to the size and the usage of the current memory, a thread 1 (user operation thread) starts to add all the picture list items meeting the upper and lower loading limits into the task queue of a thread 2 (picture resolution thread); the thread 2 assigns resources for all the picture list items that are added into the task queue of the thread 2 by the thread 1 and performs resolution processing (as the loading of the pictures needs a moment, a beautiful waiting picture may be displayed on the screen to improve the user experience), meanwhile, the thread 2 recycles the assigned resources beyond the upper and lower loading limits, notifies, after the resolution is completed, the thread 1 to release the waiting picture and display the loaded pictures. Further, a monitor is also arranged to monitor the usage of a memory periodically. Once the change in the usage of the memory reaches the threshold defined in the monitoring algorithm given in the scheme of the embodiments described herein, the system updates the upper and lower loading limits to perform an adaptive picture preloading.

As shown in Fig. 4, the initial picture directory entering process described herein is implemented based on an operating system with a Graphical User Interface (GUI for short) and mainly comprises the following steps (Step S401-Step S409):
Step S401: a picture directory is entered.
Step S402: a waiting picture is loaded.
Step S403: a list window is created and related parameters are initialized. A picture list window is created, and then the position parameters of a list control and a scroll bar control are initialized. The list control assigns a piece of additional data for each of its list items and stores information related to the picture file, wherein the most important information is the path of the picture file in a flash. The scroll bar control sets the initial value of its position parameter to be 0, indicating that the current page is the first screen of the list control.
Step S404: all picture list items are traversed to dynamically determine the number of the pictures to be loaded. First, the total capacity and the current usage of a memory are calculated to determine the picture loading threshold number(the number of the pictures that can be loaded), that is, the picture loading threshold number is dynamically set according to the total capacity of the memory and the memory occupations. It should be noted that although the picture loading threshold number is dynamically set, a minimum preloading number is also set in the embodiments described herein to guarantee user the experience, wherein the minimum preloading number is absolutely greater than the number of the pictures displayed on the current screen, and a prompt of 'insufficient memory' is presented to the user when the usage of the memory reaches a limit.
Step S405: upper and lower picture loading limits are determined, and it is determined whether the current item meets the upper and lower limits. The upper and lower picture loading limits for the list items in the list control are determined according to the position parameters of the scroll bar control, and it is determined whether the current item meets the upper and lower limits. As the directory is just accessed, the focused item is certainly the first item. Therefore, assuming that the dynamically set picture loading number is 9, the list items in the list control with index values of 1, 2, 3, 4, 5, 6 and the last three list items are to be loaded, wherein the number of the pictures to be loaded is 9, that is, there are 9 picture list items to be loaded.
Step S406: the picture resolution tasks meeting the upper and lower loading limits are added into the queue of the thread 2. After the upper and lower picture loading limits are determined, the related information (e.g. the path of a picture in a file system) of the picture meeting the upper and lower loading limits is added into the queue of the thread 2, and the flow waits for a processing result returned from the thread 2. In order to improve the sensory experience of the user, a beautiful waiting bitmap preset in the system may be loaded at this time (the loading speed of the bitmap may be increased so that the loaded bitmap can be directly used without being resolved). Moreover, an indication variable may be set to indicate the current picture loading number; then, the flow waits for the processing result of the picture resolution thread, the indication variable is decremented by 1 every time a picture is resolved until the indication variable is 0, then and the waiting picture is released, and the first screen of the current directory is displayed, wherein no response is made by the system if the user clicks an up key/down key during the picture waiting period.
Step S407: the thread 1 recycles the resources of the picture list items that do not meet the upper and lower loading limits and are assigned with system resources.
Step S408: the thread 2 processes a picture resolution request in the queue thereof through a synchronization mechanism, resolves a picture, and informs the thread 1 of the result of the resolution.
Step S409: the thread 1 monitors the actions of the user and the processing result returned from the thread 2 and processes the task result.

In this embodiment, the picture loading process in a system starting from the entering of a picture directory by a user is described, wherein pictures are pre-resolved while the user is carrying out an operation, thus guaranteeing picture data resources are ready when the user accesses the pictures and improving the performance of the system.

### Preferred embodiment 2

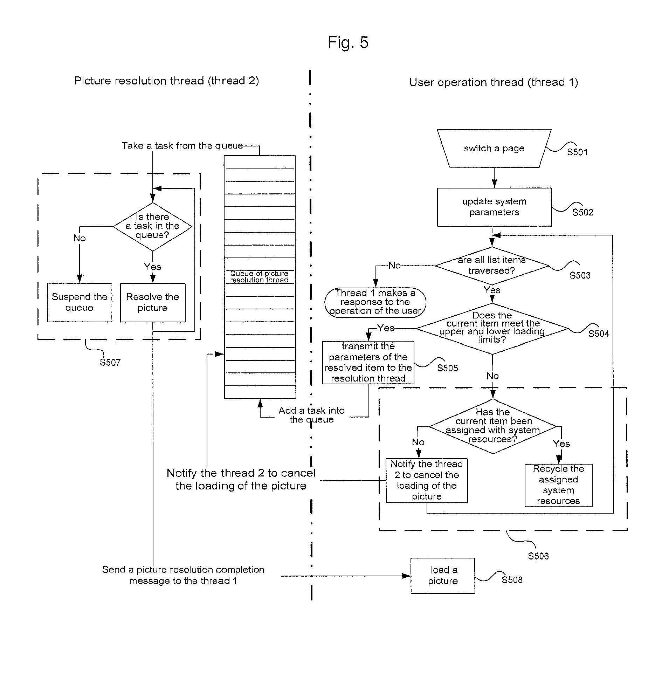

Fig. 5 is a flow chart of picture page switching according to the embodiment of the disclosure. As shown in Fig. 5, in a picture directory, a user clicks an up/down key to perform a page switch, a thread 1 adds the list items meeting an upper and lower loading limits in the queue of a thread 2 through a thread synchronization mechanism and synchronously releases the system resources of the picture list items that fail to meet the upper and lower loading limits but are assigned with system resources; the thread 2 processes the tasks in the picture resolution request queue of the thread 1, and timely feeds the processing result back to the thread ; the thread 1 monitors the processing result of the thread 2 in real time, bonds the picture assigned with system resources to a drawing handle after receiving the processing result from the thread 2, and draws the picture when the user switches to the page on which the picture is located.

It should be noted that thumbnails may be used in the picture list mentioned in the embodiments described herein, and some items may be temporarily loaded when a scroll bar is dragged with a quick key or the current screen is changed (e.g. gravity induction using a sensor). The difference between the residual memory spaces before and after entering the picture list is detected by a memory detector and compared with the memory space occupied by all the pictures in the picture list, and then it can be calculated that the difference between the residual memory spaces is far greater than the memory space occupied by all the pictures.

As shown in Fig. 5, the picture page switching process described herein mainly comprises the following steps (Step S501-Step S508):
Step S501: a page is switched. As this method is applicable to a touch screen, the user can switch a picture page by pressing an up/down key or touching a scroll bar.
Step S502: system parameters are updated. The position parameters of a list control and of a scroll bar control are updated.
Step S503: all picture list items are traversed to dynamically determine the number of the pictures to be loaded. The details of this step are identical to those of the Step S404 described in the preferred embodiment 1.
Step S504: upper and lower picture loading limits are determined, and it is determined whether the current item meets the upper and lower loading limits. The details of this step are identical to those of the Step S405 described in the preferred embodiment 1. The user can press an up/down key or touch a scroll bar to trigger an update of the upper and lower picture loading limits. The current page is changed when the user presses the up/down key, or touches or drags the scroll bar; thus, a page change event can be customized and triggered when the user presses the up/down key or touches the scroll bar. New upper and lower picture loading limits are determined according to the position parameter of the list control in a message mapping function.
Step 505: the new picture resolution tasks meeting the upper and lower loading limits are added into the queue of the thread 2; meanwhile, the pictures that fail to meet the upper and lower limits but occupy system resources are released.
Step S506: the thread 1 recycles the resources of the picture list items that fail to meet the upper and lower lading limits but are assigned with system resources.

In the picture directory, the user touches a scroll bar to switch a page. At this time, the thread 1 starts to add the list items meeting the upper and lower limits into the queue of the thread 2 through a synchronization mechanism and releases the system resources of the list items that fail to meet the upper and lower limits but are assigned with system resources. However, as the speed of the page switching resulting from a touch on the scroll bar is far faster than the picture resolution speed, each minimal movement (the minimal distance moved in a scroll bar event triggered by dragging the scroll bar) of the scroll bar will change the upper and lower picture loading limits. Therefore, there may be a plurality of list items meeting the loading condition, and the thread 1 will add the list items into the resolution queue of the thread 2. However, as the switching speed is very fast, it is possible that the task that met the loading limits and added into the task queue of the thread 2 a moment ago fails to meet an upper and lower limits now, the processing of this task by the thread 2 will only lead to a waste of the precious resources of a processor and a memory, an obstruction in the timely processing of a task needing resolution and a possible memory leakage. Therefore, in order to provide a better user experience, the thread 1 cancels the unprocessed item tasks that are added in the queue of the thread 2 but fail to meet the current loading condition, thereby guaranteeing the task processed by the thread 2 is always valid.
Step S507: the thread 2 processes a picture resolution request in the queue thereof through a synchronization mechanism, resolves a picture, and informs the thread 1 of the result of the resolution.
Step S409: the thread 1 monitors the actions of the user and the processing result returned from the thread 2 and processes the task result, for example, loads the picture.

In this embodiment, the picture loading process carried out when a user switches a page is described, which implements a zero-waiting of the user performing picture switching, improves the user experience, and fully exploits the system resources.

### Preferred embodiment 3

The page exiting process carried out by a system during a picture loading period mainly comprises the following steps:
Step 1: the number of the pictures to be loaded is determined dynamically. The details of this step are identical to those of the Step S404 described in the preferred embodiment 1.
Step 2: an update of the upper and lower picture loading limits is triggered when the user exits the current page.
Step 3: the thread 1 adds the related information of the list items meeting the upper and lower loading limits into the queue of the thread 2.
Step 4: the current page is exited before all the picture resolution tasks are performed. At this time, a page change event is triggered to determine new upper and lower picture loading limits according to the position parameter of a list control.
Step 5: the thread 2 are notified to cancel the resolution tasks beyond the upper and lower picture loading limits. If there are some list items in the queue of the thread 2 occupying no system resources, then a signal is sent to the thread 2 to indicate that the resolution on the items is cancelled, and the thread 2 skips the items and releases system resources.

It should be noted that in the preferred embodiment 2, pressing an up/down key quickly and dragging a scroll bar for display will also lead to a change in the upper and lower picture loading limits and the occurrence of a picture resolution task that exists in the queue of the thread 2 but is beyond the upper and lower picture loading limits. In this case, processing will be carried out as described in Step 3.

In conclusion, in view of the two design forms of exiting picture terminal device having a low-speed processor and a small-capacity memory, the disclosure provides a compromise scheme in which the pictures are loaded in multiple threads and the pictures are pre-resolved while the user is carrying out an operation, which guarantees that picture data resources are ready when the user accesses pictures and improves system performance. Moreover, the cognition of the user on products is increased in the concept aspect of the design of user experience, and an excellent human-machine interface is created for the user. Additionally, the technical scheme of this disclosure is no less efficient than the first loading mode or less flexible than the second loading mode in terms of the multi-thread scheduling and memory management.

Apparently, it should be appreciated by those skilled in the art that the modules or steps of the disclosure can be implemented by one or more general-purpose computers, for example, they may be performed in a single computer or distributed in a network consisting of multiple computers. Optionally, they may be implemented by computer-executable program codes, such that the modules or steps can be stored in a storage device to be executed by a computer. Moreover, in some cases, the steps may be performed in a sequence different from that illustrated therein, the modules or steps may be implemented as or in individual integrated circuit modules respectively, or some of the modules or steps may be implemented as or in a single integrated circuit module. Thus, the disclosure is not limited to any special combination of hardware and software.

The mentioned above is only preferred embodiments of the disclosure but not limitation to the disclosure. For those skilled in this art, various modification and variations are possible. Any modification, equivalent and improvement without departing from the spirit and scope of the disclosure fall within the protection scope of the disclosure.

## Claims

1. A picture loading method, comprising:
determining a number of pictures that can be loaded according to an available memory space;
acquiring, from a plurality of pictures, the determined number of pictures beginning at a starting position;
assigning resources for the acquired pictures; and
preloading the acquired pictures using the resources.

2. The picture loading method according to claim 1, wherein the acquiring, from the plurality of pictures, the determined number of pictures beginning at the starting position comprises: when the starting position is changed, re-acquiring the determined number of pictures beginning at the changed starting position.

3. The picture loading method according to claim 2, wherein the starting position is changed by at least one of dragging a scroll bar on a screen with a quick key or through a touch, and changing the current screen.

4. The picture loading method according to claim 3, further comprising:
determining new pictures to be displayed on a screen in a thumbnail form, after the starting position is changed; and
displaying the new pictures to be displayed directly from the preloaded pictures, when the new pictures to be displayed belong to the preloaded pictures.

5. The picture loading method according to claim 2, further comprising: after preloading the acquired pictures using the resources, recycling the resources assigned to the pictures not belonging to the re-acquired pictures.

6. The picture loading method according to claim 1, wherein the number is greater than a number of pictures displayed on a current screen.

7. The picture loading method according to claim 1, wherein the starting position is determined through list items of pictures in a picture directory and/or a position of a scroll bar on a screen.

8. A terminal, comprising:
a determination module, configured to determine a number of pictures that can be loaded according to an available memory space;
an acquisition module, configured to acquire, from a plurality of pictures, the determined number of pictures beginning at a starting position; and
a loading module, configured to assign resources for the acquired pictures and to preload the acquired pictures using the resources.

9. The terminal according to claim 8, wherein the acquisition module comprises an update unit, configured to re-acquire the determined number of pictures beginning at the changed starting position, when the starting position is changed.

10. The terminal according to claim 9, wherein the update unit is further configured to change the starting position when a scroll bar on a screen is dragged with a quick key or through a touch or the current screen is changed.
